# FASCICULE DE BREVET EUROPEEN

(11) **EP 0 677 629 B1**
(45) Date de publication et mention de la délivrance du brevet: **03.07.2002**
(21) Numéro de dépôt: 95400855.3
(22) Date de dépôt: 14.04.1995
(51) Int. Cl.: E04H 12/18, E04C 3/00

(54) **Elément de structure transformable perfectionné**
Verbessertes verwandelbares Gefügeelement
Improved convertible structural element

(30) Priorité: 14.04.1994 CH 111794; 21.04.1994 FR 9404796
(43) Date de publication de la demande: 18.10.1995
(73) Titulaire: BBD S.A., CH-2300 La Chaux-de-Fonds (CH)
(72) Inventeur: Bringolf, Serge, CH-2300 La Chaux-de-Fonds (CH); Burri, Alain, CH-1231 Conches/Genève (CH)
(74) Mandataire: Colas, Jean-Pierre

(56) Documents cités:
- WO-A-92/07154
- DE-A- 2 044 434
- FR-A- 1 136 948
- GB-A- 1 141 257

## Description

La présente invention est relative à un élément de structure transformable comprenant deux composantes souples qui après assemblage sont capables d'assumer ensemble la forme d'une poutre rigide.

Un tel élément de structure transformable est décrit dans la demande de brevet international N° WO 92/07 154 déposée le 4 octobre 1991.

Dans une version préférée de l'élément de structure décrit dans la demande internationale précitée, ses composantes sont deux chaînes à maillons dont les maillons sont articulés entre eux autour d'axes respectifs et pourvus de points d'appui antagonistes, le premier point d'appui d'un maillon de rang n de chaque chaîne coopérant avec un second point d'appui d'un maillon de rang n-1 pour emprisonner, lors de la rigidification de l'élément, des éléments d'accrochage que forment les axes des maillons de l'autre chaîne.

La présente invention vise à perfectionner l'élément de structure décrit brièvement ci-dessus en le dotant de moyens permettant, non seulement d'en faciliter l'assemblage, mais également d'en améliorer la stabilité après l'assemblage.

Ainsi, l'élément de structure transformable selon l'invention, comprenant deux composantes souples qui après assemblage sont capables d'assumer ensemble le forme d'une poutre rigide, cet élément comportant deux chaînes à maillons dont les maillons sont articulés entre eux autour d'axes respectifs et pourvus de points d'appui antagonistes, le premier point d'appui d'un maillon de rang n de chaque chaîne coopérant avec un second point d'appui d'un maillon de rang n-1 pour emprisonner, lors de la rigidification de l'élément, des éléments d'accrochage que forment les axes des maillons de l'autre chaîne est caractérisé en ce qu'au moins certains maillons d'au moins l'une des chaînes de l'élément de structure présentent une rangée de dents qui s'étendent sur toute la largeur des maillons et qui forment avec les dents des maillons voisins dans le sens de la longueur de l'élément, une denture continue s'étendant sur toute la longueur de l'élément, la rangée de dents d'un maillon de rang n coincidant latéralement et partiellement avec les rangées de dents respectives des maillons de rang n+1 et de rang n-1, ledit élément de structure présentant, dans sa configuration assemblée un corps allongé rigide hors duquel fait saillie ladite denture pour permettre un engrènement sur toute la largeur de cet élément.

Grâce à ces caractéristiques, on obtient un élément de structure transformable qui présente longitudinalement au moins une crémaillère dont les dents peuvent coopérer avec des organes dentés de stabilisation engrènant sur une largeur de l'élément de structure pouvant aller jusqu'à sa largeur totale, ces organes dentés étant placés aux bords de l'élément de structure assemblé et assurant en même temps une reprise de la charge imposée à l'élément, à travers les plaquettes de ses maillons. Ainsi, l'on peut libérer les axes des chaînes de leur rôle de support de charge.

De préférence, les dents des maillons sont dimensionnées pour correspondre aux caractéristiques des normes en vigueur pour les dentures.

D'autres caractéristiques et avantages de la présente invention apparaîtront au cours de la description qui va suivre, donnée uniquement à titre d'exemple et faite en se référant aux dessins annexés sur lesquels :
- la figure 1 montre une vue de côté de quelques maillons des deux chaînes de l'élément de structure dans leur configuration désassemblée;
- les figures 1A et 1B montrent à des fins d'explication, un maillon de chaque chaîne de l'élément de structure;
- la figure 2 est une vue partielle d'un élément de structure assemblé selon l'invention, les maillons des chaînes étant vus de chant;
- la figure 3 est une vue de l'élément de structure assemblé muni d'un dispositif qui en permet la translation dans le sens longitudinal;
- la figure 4 est une vue de l'ensemble représenté sur la figure 3, les maillons des chaînes étant vus de chant;
- la figure 5 est une vue de face d'une boîte d'assemblage permettant de transformer les chaînes souples, composantes de l'élément de structure selon l'invention, en cet élément sous sa forme rigide, l'assemblage se faisant de façon motorisé;
- la figure 5A est une vue en coupe partielle vue selon la ligne VA-VA de la figure 5;
- la figure 5B est une vue en coupe partielle analogue à la vue de la figure 5A, d'une variante de boîte d'assemblage pour un élément de structure dont les chaînes comportent un intervalle longitudinal entre les plaquettes de chaque maillon;
- la figure 6 montre une vue de face, côté intérieur, du couvercle de la boîte d'assemblage représentée sur la figure 5;
- la figure 7 montre une variante de l'invention, appliquée pour former un élément de structure courbe et rigide;
- la figure 8 est une vue schématique en élévation d'une application de l'élément de structure suivant l'invention à un appareil de projection escamotable, l'appareil étant vue de côté;
- la figure 9 est une vue de face de l'appareil de la figure 8;
- la figure 10 montre une vue schématique partielle d'une autre application de l'invention à une structure démontable, par exemple pour des stands d'exposition;
- la figure 11 est une vue en coupe, prise selon la ligne XI-XI de la figure 10.

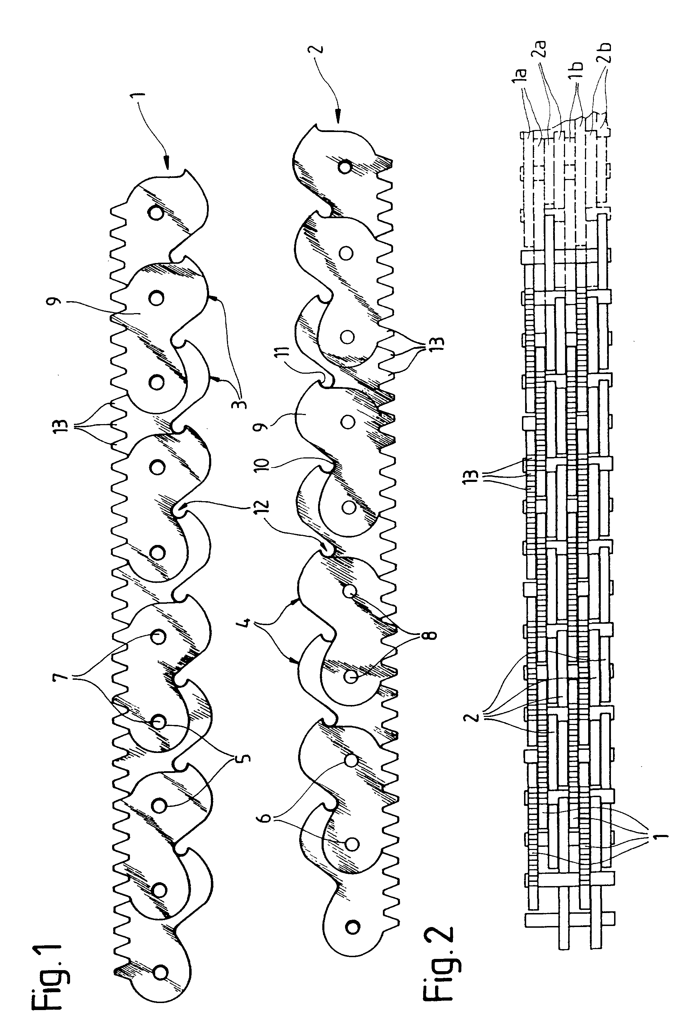

En se référant tout d'abord à la figure 1, on voit que l'élément de structure transformable selon l'invention comporte au moins deux chaînes à maillons 1 et 2, de préférence de forme identique, et composées chacune d'une série de maillons, respectivement 3 et 4, tous les maillons des deux chaînes pouvant également avoir la même forme.

Chaque maillon présente deux trous 5 et 6 à travers lesquels peuvent passer des axes d'articulation 7 et 8, ces axes appartenant respectivement à la chaîne à maillons 1 et à la chaîne à maillons 2.

Chaque maillon comporte une plaquette 9 présentant un premier point d'appui latéral 10 matérialisé par une dépression de l'une des flancs de la plaquette 9, ainsi qu'un deuxième point d'appui latéral 11 défini par une partie crochue prévue à l'une des extrémités de chaque plaquette 9. On voit sur la figure 1 que le point d'appui latéral 10 de la plaquette d'un maillon donné forme avec le point d'appui latéral 11 de l'une des plaquettes qui le précède (ou qui le suit) dans la chaîne à maillons, une encoche 12 destinée à se refermer sur l'axe correspondant 7 ou 8 de la chaîne à maillons opposée, lors de l'assemblage de l'élément de structure.

Les figures 1A, 1B et 2 font apparaître un tel élément de structure assemblé étant entendu que, dans l'exemple représenté, chaque chaîne 1 et 2 est en fait formée de deux rangées de maillons parallèles, respectivement 1a, 1b et 2a, 2b, les deux chaînes étant latéralement imbriquées l'une dans l'autre.

La description qui précède ne fait que répéter brièvement celle de la demande de brevet international précitée à laquelle on se reportera pour plus de détails.

Il est à noter que chaque chaîne peut être formée d'un nombre plus grand de rangées parallèles de maillons, ce nombre étant choisi en fonction de la solidité et de la rigidité de l'élément de structure qu'elles composeront après assemblage.

Conformément à la présente invention et dans le but, d'une part d'améliorer la stabilité de la poutre formée par l'élément de structure et d'autre part, d'en faciliter l'assemblage et le désassemblage, la présente invention prévoit de munir chaque maillon d'au moins l'une des chaînes, d'une rangée de dents 13 sur le bord du maillon opposé à celui qui présente lesdits points d'appui 10 et 11, la rangée de dents de chaque maillon de la chaîne formant avec les dents des maillons adjacents, une denture continue faisant office de crémaillère. Dans l'exemple représenté sur la figure 2, tous les maillons des deux chaînes comportent une rangée de dents 13, si bien que la crémaillère de chaque chaîne comporte en quelque sorte quatre "pistes" parallèles. Cependant, selon des variantes, on peut ne prévoir les dentures que sur une seule rangée de maillons, le choix étant dicté par les considérations de rigidité mécanique et de facilité d'assemblage de l'ensemble.

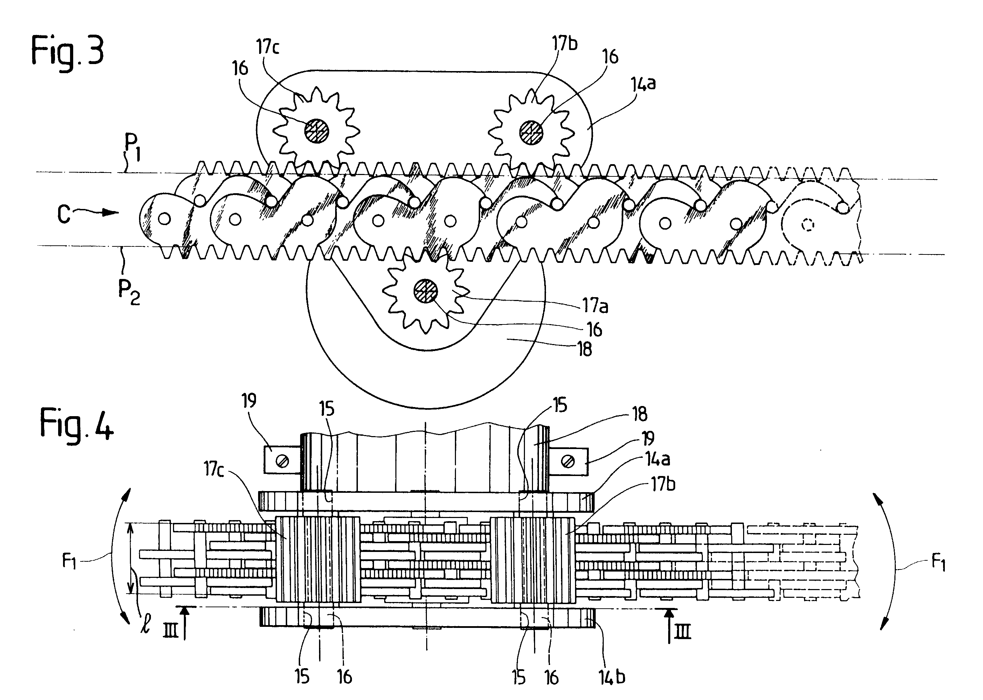

On notera toutefois que, selon une caractéristique importante de l'invention, l'élément transformable (voir figures 3 et 4 notamment) présente, dans sa configuration assemblée, un corps rigide C délimité par deux plans fictifs P₁ et P₂ parallèles à ces axes 7,8, d'où font saillie vers l'extérieur les dents 13 qui constituent les crémaillères.

De cette façon, un engrènement avec ces dents est possible sur toute la largeur 1 de l'élément.

Les figures 1A et 1B montrent respectivement un maillon 3,4 de chaque chaîne 1 et 2, séparé des autres maillons et vu du côté du point d'appui 11.

Les figures 3 et 4 montrent comment l'élément de structure transformable selon l'invention peut être associé à un dispositif qui en permet la translation horizontale. Ce dispositif comprend un châssis formé de deux plaques 14a et 14b disposées de part et d'autre du trajet de translation horizontale de l'élément de structure. Chaque plaque 14a, 14b présente une forme triangulaire et au voisinage de chaque angle du triangle un trou 15 recevant l'extrémité formant embout d'axe 16 d'un pignon 17a, 17b, 17c, respectivement. Ces pignons ont des dentures de mêmes caractéristiques que celles des dents de l'élément de structure. Il est à noter que ces caractéristiques peuvent correspondre aux normes en vigueur pour les dentures classiques. Ceci signifie que les pignons peuvent être des éléments disponibles sur le marché.

L'une 14a des plaques est fixée sur le carter d'un moteur d'entraînement 18, par exemple électrique ou hydraulique, qui est couplé en rotation avec le pignon 17a et qui sert ainsi à assurer le mouvement longitudinal de l'élément de structure. Le carter du moteur 18 peut être pourvu de pattes de fixation 19 pour permettre la fixation de l'ensemble sur un support approprié (non représenté).

Grâce à ce dispositif, on peut donc non seulement assurer le mouvement longitudinal de l'élément de structure en commandant la rotation du moteur 18 dans un sens ou dans l'autre, mais également en améliorer la stabilité latérale (voir les flèches F1 sur la figure 4), les pignons formant également des éléments d'appui et de guidage latéraux et ce sur toute la largeur 1 de l'élément de structure.

En outre, à supposer que l'élément de structure des figures 3 et 4 doit supporter une charge dans le sens de son déplacement longitudinal, cette charge est reprise à travers les dentures de la chaîne 2, par le pignon 17a et de là par le châssis 14a, 14b et le moteur 18. Il en résulte que les axes des chaînes peuvent être dimensionnés plus légèrement, car ils servent surtout à assurer l'accrochage des maillons des chaînes entre eux. D'ailleurs, il est possible de rendre moteurs non seulement le pignon 17a, mais également les autres pignons 17b et 17c de manière que ces derniers puissent également contribuer à la reprise de la charge.

Il est à noter également que plus chaque chaîne comporte des rangées parallèles de maillons, et plus la charge imposée à l'élément de structure peut être importante, car toutes ces rangées peuvent être munies d'une denture coopérant avec les mêmes pignons.

Un autre avantage de la présence des dents sur les plaquettes consiste en ce que leur coopération avec les pignons peut se faire sur l'élément déjà assemblé qu'un espace latéral entre les plaquettes soit présent ou non.

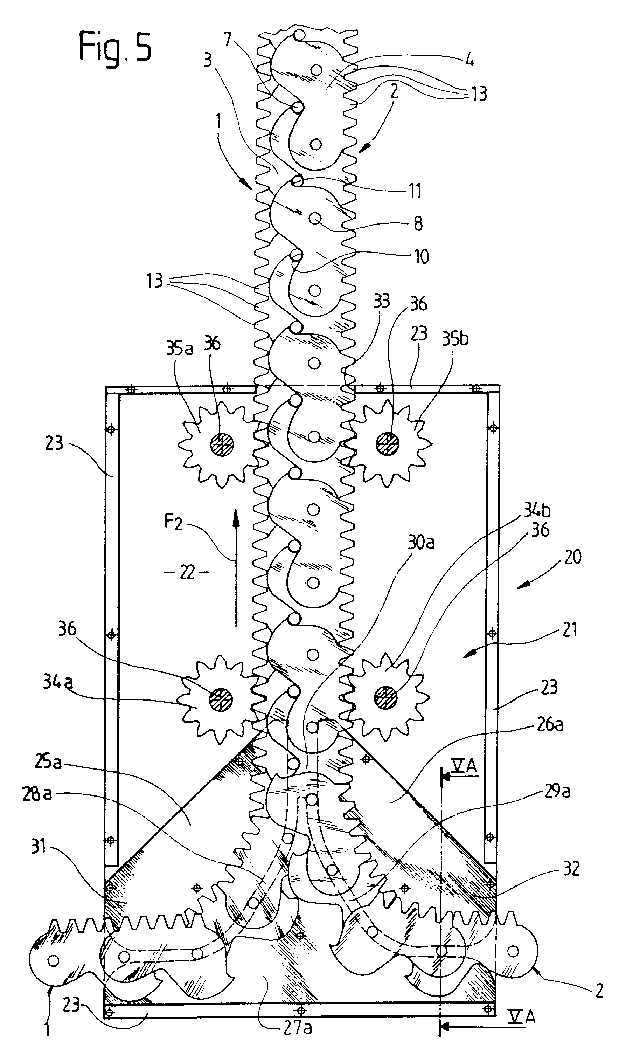

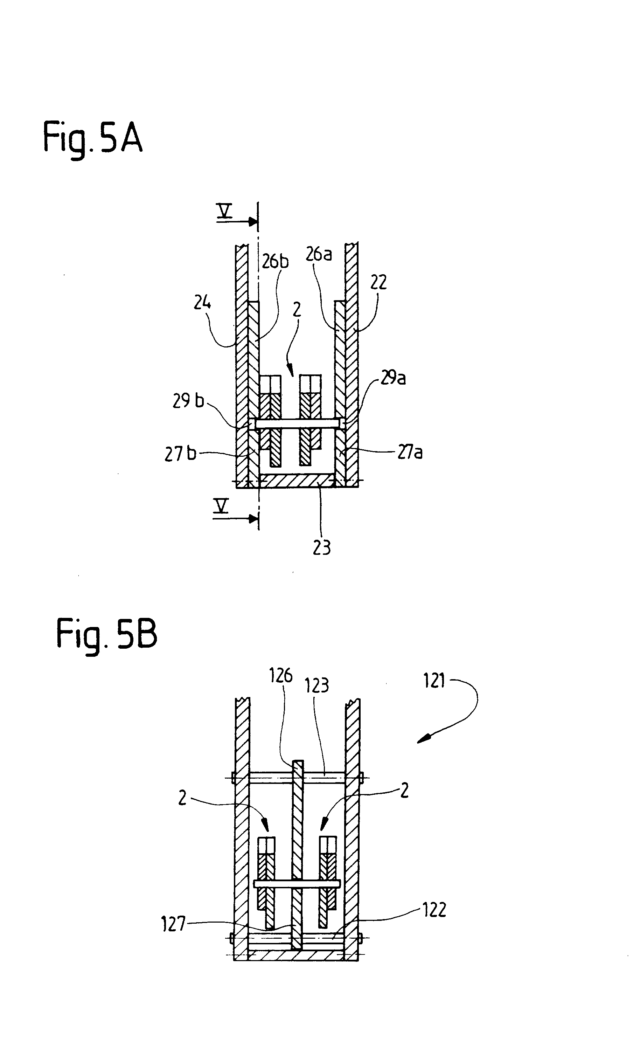

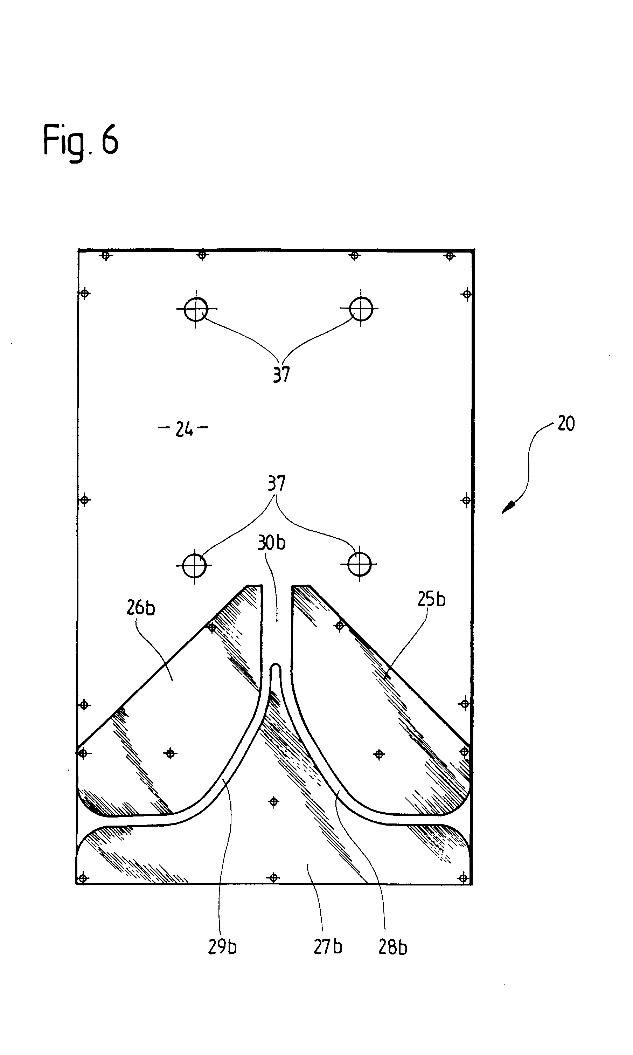

Les figures 5, 5A et 6 montrent comment les caractéristiques de l'invention peuvent être mises en oeuvre pour l'assemblage automatique des deux chaînes 1 et 2 et former ainsi une poutre constituant l'élément de structure suivant l'invention.

Ces figures 5, 5A et 6 représentent l'élément de structure associé à un mécanisme assembleur 20. Ce dernier comporte une boîte d'assemblage 21 formé d'un fond 22, de bords 23 et d'un couvercle 24, les bords 23 ne faisant pas le tour complet de la boîte. Des plaques 25a, 25b, 26a, 26b et 27a, 27b sont respectivement rapportées contre le fond et le couvercle de la boîte d'assemblage pour délimiter trois par trois deux guides d'assemblage incurvés 28a, 28b et 29a, 29b qui se rejoignent respectivement pour déboucher dans deux guides rectilignes 30a et 30b.

La boîte d'assemblage 21 comporte deux entrées latérales 31 et 32, respectivement pour les chaînes 1 et 2, et une sortie 33, pour l'élément de structure assemblé.

Dans le mode de réalisation représenté, les entrées 31 et 32 sont situées respectivement de chaque côté de la boîte d'assemblage. Cependant, selon des variantes, il est possible de prévoir ses entrées sur le même coté de cette boîte ou sur des côtés différents selon les besoins de la construction. Dans ces cas, les profils des guides doivent naturellement être adaptés en conséquence.

La sortie 33 est située sur le trajet de progression de l'élément de structure en cours d'assemblage, trajet de part et d'autre duquel sont placées deux paires de pignons de guidage 34a, 34b et 35a, 35b destinées à venir en prise avec l'élément de structure sur toute la largeur de celui-ci, d'une part à l'endroit où celui-ci vient de quitter les guides rectilignes 30a et 30b, et d'autre part à l'endroit où cet élément de structure va quitter la boîte d'assemblage 21.

Ces pignons sont montés respectivement sur des axes tourillonnant dans des trous 37 prévus à cet effet dans le fond et le couvercle de la boîte 21. Il est souhaitable qu'au moins l'un de ces pignons soit couplé à un moteur d'entraînement (non représenté) de la façon indiquée sur la figure 3. De cette manière, l'assemblage et le désassemblage de l'élément de structure peuvent se faire automatiquement et de façon motorisée. En effet, les axes des chaînes 1 et 2 sont progressivement emprisonnés dans les encoches 12 (figure 1), lorsqu'ils pénètrent par leurs extrémités dans les guides rectilignes 30a respectivement 30b. Les chaînes sont alors entraînées dans le sens de la flèche F2 (figure 5). Au contraire, lorsque les chaînes sont entraînées en sens inverse, les axes sont libérés des encoches 12. Grâce aux caractéristiques de l'invention, le mouvement de translation de l'élément de structure est donc provoqué positivement par la coopération des pignons moteurs avec les dentures des chaînes 1 et 2.

Les paires de pignons 34a, 34b et 35a, 35b contribuent également à augmenter la stabilité de la poutre une fois formée, par le maintien latéral qu'ils exercent sur les maillons des deux chaînes se trouvant en prise par leur denture avec ces pignons.

La figure 5B montre partiellement un autre mode de réalisation d'une boîte d'assemblage 121 dont le couvercle et le fond sont munis d'entretoises 122, 123 servant à supporter trois plaques de guidage 125, 126, 127 dont les formes sont celles des plaques respectives 25a, 25b, 26a, 26b et 27a, 27b. (La plaque 125 n'est pas visible sur la figure 5B). Ces plaques définissent donc des guides de même profil que ceux représentés aux figures 5, 5A et 6 et qui permettent donc ainsi l'assemblage et le désassemblage de l'élément de structure. Cette construction présente l'avantage d'une plus grande simplicité, mais elle nécessite la présence d'un intervalle entre les plaquettes de chaque maillon de l'une des chaînes (en l'occurrence la chaîne 1) pour que celle-ci présente un passage longitudinal pour les plaques 125, 126 et 127.

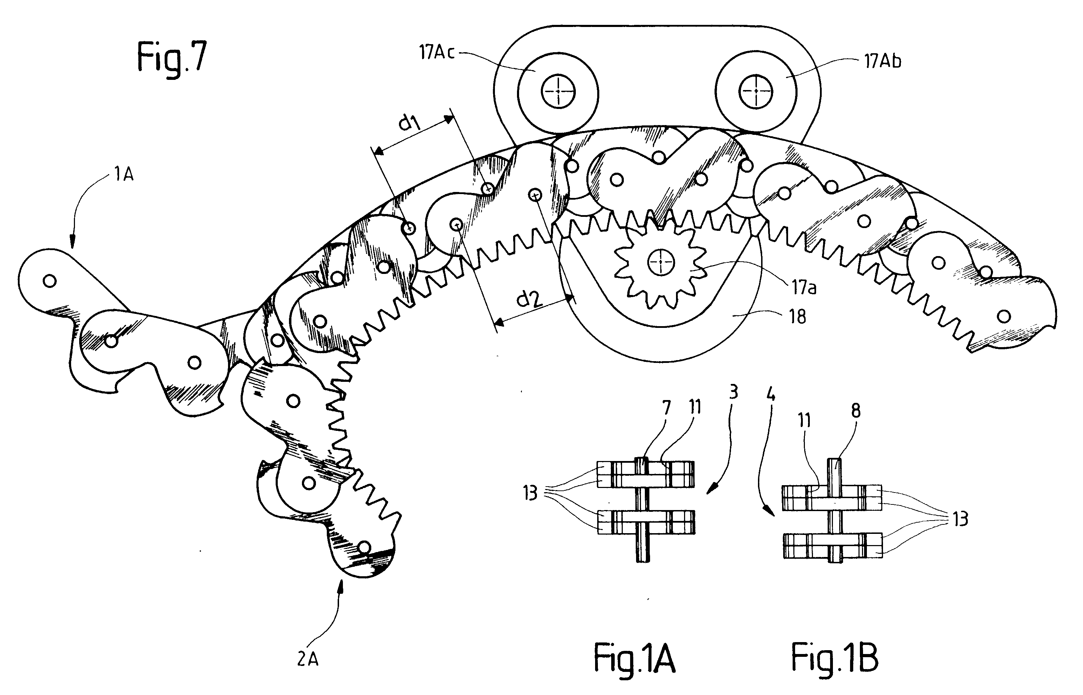

En se référant maintenant à la figure 7, on voit que l'élément de structure suivant l'invention peut également être courbe. Cette forme est obtenue en choisissant pour l'une des chaînes 1A un entre-axe d1 des maillons supérieur à celui d2 des maillons de l'autre chaîne 2A. La chaîne 2A ayant, dans l'exemple représenté, la distance d2 la plus faible sera à l'intérieur de la courbure et comportera une denture comme représenté. En revanche, l'autre chaîne 1A située à l'extérieur de la courbure sera de préférence lisse. Un tel élément de structure peut être associé à un dispositif de translation semblable à celui qui est représenté sur la figure 3. La différence des deux dispositifs réside dans le fait que les pignons 17a et 17b sont remplacés par des galets lisses 17Ab et 17Ac pour permettre une adaptation au bord lisse de la chaîne 1A.

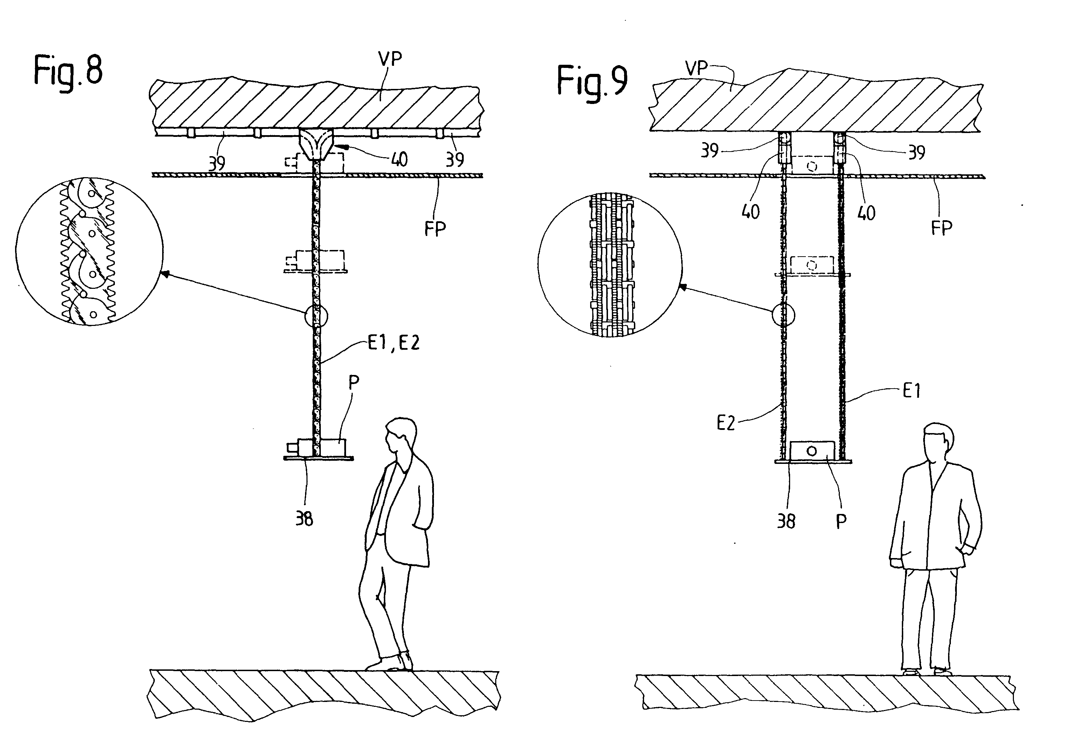

Les figures 8 et 9 montrent un premier exemple (parmi les nombreux exemples possibles) de l'élément de structure suivant l'invention. Il s'agit ici d'une installation permettant de positionner un objet à une hauteur quelconque dans un local. Dans l'exemple, cet objet est un appareil P, de projection de diapositives par exemple, présent dans une salle de conférence ou analogue, le projecteur P pouvant être escamoté dans un faux plafond FP.

Le projecteur P est placé sur un plateau 38 accroché à deux éléments de structure E1 et E2 selon l'invention, montés en parallèle.

A l'état escamoté, les chaînes de ces éléments de structure E1 et E2 sont logées respectivement dans deux caissons 39 montés sous le vrai plafond VP du local. Ces caissons communiquent avec un dispositif d'assemblage et de transmission 40 également monté dans le faux plafond FP. Ce dispositif peu être conçu selon le mode de réalisation représenté sur les figures 5, 5A et 6, ou selon celui de la figure 5B. Lors de l'utilisation de cet ensemble, le projecteur P peut être placé à une hauteur quelconque sous le faux plafond FP ou bien y être escamoté et caché à la vue lorsqu'il n'est pas utilisé. Dans cette position, le plateau 38 peut venir affleurer le faux plafond FP en s'ajustant exactement dans l'ouverture prévue dans celui-ci. Bien entendu, le plateau 38 peut être utilisé pour supporter d'autres appareils ou objets qu'un projecteur, pour en permettre le réglage de la hauteur d'utilisation.

Il est également à noter que le plateau 38 peut être une pièce s'ajustant dans l'une des faces d'une double paroi, voire le sol d'un local, dans lequel cet objet doit être escamoté, l'extension de ou des éléments de structure pouvant alors se faire soit horizontalement, le plateau ayant alors la forme d'une équerre, par exemple, soit verticalement, mais alors selon un mouvement d'escamotage de haut en bas, c'est-à-dire inverse par rapport à celui représenté sur les figures 8 et 9.

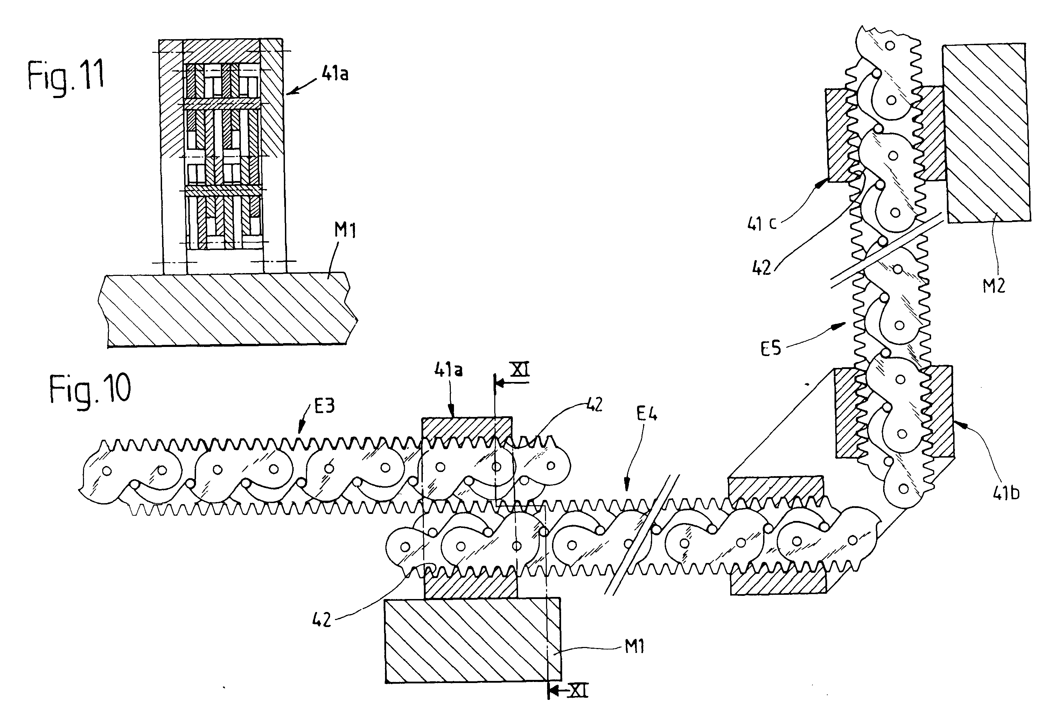

Les figures 10 et 11 montrent une autre application de l'élément de structure suivant l'invention, à savoir l'édification de constructions provisoires telles que des stands d'exposition, par exemple. Une telle construction peut comprendre des montants M1, M2....etc., fichés dans le sol par exemple, et entretoisés par des éléments de structure E3, E4, E5...........etc. suivant l'invention, ces éléments de structure s'étendant horizontalement, par exemple à plusieurs hauteurs. Des colliers 41a, 41b, 41c munis d'empreintes dentées 42 peuvent être prévus pour solidariser les éléments de structure et le montants. Les empreintes sont conçues pour s'adapter aux dentures des éléments de structure. Certains de ces colliers, par exemple les colliers 41a et 41b peuvent servir à l'assemblage de deux éléments de structure, comme les éléments E3 et E4, d'une part et les éléments de structure E4 et E5, d'autre part.

Des cloisons (non représentées) fixées aux colliers 41a, 41b et 41c peuvent compléter l'ensemble de la construction. Celle-ci est ainsi entièrement modulaire et étant démontée elle ne prend que peu de place du fait que les éléments de structure E3, E4, E5 etc...peuvent être enroulés après leur désassemblage. En outre, grâce à la coopération avec les dentures des éléments de structure, les colliers maintiennent fermement la construction sur les montants de sorte que la construction présente une grande solidité même si on n'utilise en hauteur que peu d'éléments de structure comme entretoise (par exemple trois éléments sur 2 mètres de hauteur).

## Revendications

1. Elément de structure transformable comprenant deux composantes souples qui après assemblage sont capables d'assumer ensemble la forme d'une poutre rigide, cet élément comportant deux chaînes à maillons (1,2) dont les maillons (3,4) sont articulés entre eux autour d'axes respectifs (7, 8) et pourvus de points d'appui antagonistes (10, 11), le premier point d'appui (10) d'un maillon de rang n de chaque chaîne coopérant avec un second point d'appui (11) d'un maillon de rang n-1 pour emprisonner, lors de la rigidification de l'élément, des éléments d'accrochage que forment les axes (7, 8) des maillons de l'autre chaîne, **caractérisé en ce qu'**au moins certains maillons d'au moins l'une des chaînes de l'élément de structure présentent une rangée de dents (13) qui s'étendent sur toute la largeur des maillons et qui forment avec les dents des maillons voisins dans le sens de la longueur de l'élément, une denture continue s'étendant sur toute la longueur de l'élément, la rangée de dents d'un maillon de rang n coincidant latéralement et partiellement avec les rangées de dents respectives des maillons de rang n+1 et de rang n-1, ledit élément de structure présentant, dans sa configuration assemblée un corps allongé (c) rigide hors duquel fait saillie ladite denture pour permettre un engrènement sur toute la largueur (1) de cet élément.

2. Elément de structure suivant la revendication 1, **caractérisé en ce que** chacune desdites chaînes (1, 2) comporte au moins une rangée de maillons formant dans le sens de la longueur de ces chaînes une denture continue (13).

3. Elément de structure suivant l'une quelconque des revendications 1 et 2, **caractérisé en ce qu'**au moins l'une desdites chaînes comporte plusieurs rangées de maillons en parallèle, et **en ce qu'**au moins deux de ces rangées de maillons présentent des dents (13) formant une denture continue dans le sens de la longueur de cette chaîne.

4. Ensemble **caractérisé en ce qu'**il comporte en combinaison :
- un élément de structure suivant l'une quelconque des revendications précédentes, et
- un dispositif pour provoquer une translation longitudinale dudit élément de structure,
- ledit dispositif de translation longitudinale comprenant un châssis (14a, 14b) sur lequel sont montés à rotation au moins trois organes de roulement (17a, 17b et 17c), au moins un premier (17a) de ces organes de roulement étant denté pour coopérer avec les dents (13) d'au moins une rangée de maillons de l'une des chaînes dudit élément de structure, **en ce que** ledit premier organe de roulement (17a) est couplé à un moteur d'entraînement (18), et **en ce que** les deuxième et troisième organes de roulement (17b, 17c) sont en contact du bord extérieur de la deuxième desdites chaînes.

5. Ensemble suivant la revendication 4, **caractérisé en ce qu'**il comporte un élément de structure suivant l'une quelconque des revendications 2 et 3, et **en ce que** lesdits deuxième et troisième organes de roulement (17b, 17c) sont dentés pour coopérer avec ladite deuxième chaîne de l'élément de structure.

6. Ensemble suivant l'une quelconque des revendications 4 et 5, **caractérisé en ce que** ledit châssis est une boîte d'assemblage/désassemblage (21) comportant un dispositif d'assemblage/désassemblage dudit élément de structure, situé au voisinage desdits éléments de roulement(17a, 17b, 17c; 34a, 34b; 35a, 35b).

7. Dispositif destiné au positionnement en hauteur d'un objet et comportant un ensemble suivant l'une quelconque des revendications 4, 5 et 6, **caractérisé en ce qu'**il comporte un plateau (38) destiné à supporter ledit objet (P), ledit plateau étant solidaire de l'une des extrémités d'au moins un élément de structure (E1, E2) suivant l'une quelconque des revendications 1 à 3, ledit élément de structure étant associé audit dispositif de translation longitudinale, (14a à 19).

8. Dispositif suivant la revendication 7, placé dans un local muni d'une double paroi (FP), **caractérisé en ce que** ledit plateau de support (38) est une pièce amovible de ladite double paroi (FP), **en ce que** lesdites composantes (1, 2) dudit élément de structure (E1, E2) ainsi que ledit objet (P) sont escamotables dans ladite double paroi (FP), et **en ce qu'**il comporte également au moins deux caissons (39) fixés dans la double paroi et communiquant avec ledit dispositif de translation longitudinale (40) placé également dans la double paroi, lesdits caissons (39) servant à recevoir respectivement lesdites composantes (1, 2) à l'état escamotée dudit objet.

9. Dispositif selon la revendication 8 **caractérisé en ce que** ladite double paroi est un faux plafond (FP) et **en ce que** le mouvement d'escamotage dudit objet est réalisé verticalement de bas en haut.

10. Dispositif suivant la revendication 9,
**caractérisé en ce que** ledit objet est un appareil de projection (P) d'images telles que des diapositives.

11. Dispositif pour l'édification de constructions temporaires telles que des stands de foire, **caractérisé en ce qu'**il comprend une pluralité de montants (M1, M2) destinés à être fixés au sol et une pluralité d'éléments de structure (E3, E4, E5) selon l'une quelconque des revendications 1 à 3, destinés à être rapportés auxdits montants pour les entretoiser, et **en ce que** des colliers de serrage (41a, 41b, 41c) munis d'empreintes dentées s'ajustant aux dents (13) desdits éléments de structure, sont prévus pour solidariser lesdits montants (M1, M2) et lesdits éléments de structure.

## Patentansprüche

1. Verwandelbares Gefügeelement mit zwei biegeschlaffen Komponenten, die nach ihrer Zusammenfügung zusammen die Gestalt eines steifen Trägers annehmen können, wobei das Gefügeelement zwei Gliederketten (1,2) aufweist, deren Glieder (3,4) an einander über Achsen (7,8) angelenkt und mit gegenüberliegenden Stützpunkten (10,11) versehen sind, wobei ein erster Stützpunkt (10) eines Kettenglieds n jeder Gliederkette mit einem zweiten Stützpunkt (11) eines Kettenglieds n-1 zusammenwirkt, um während der Versteifung des Gefügeelements durch die Achsen (7,8) der Kettenglieder der anderen Gliederkette gebildete Kupplungselemente zu umgreifen,
**dadurch gekennzeichnet, dass** zumindest einige Kettenglieder wenigstens einer der Gliederketten des Gefügeelements eine Reihe von Zähnen (13) aufweisen, die sich über die gesamte Breite der Kettenglieder erstrecken und mit den Zähnen der benachbarten Kettenglieder in der Längsrichtung des Gefügeelements eine sich über die gesamte Länge des Gefügeelements erstreckende kontinuierliche Verzahnung bilden, wobei die Zahnreihe eines Kettenglieds n seitlich und teilweise mit den Zahnreihen der Kettenglieder n+1 und n-1 fluchtet, und wobei das Gefügeelement in seiner zusammengefügten Form einen langgestreckten Körper (C) bildet, von dem die Verzahnung absteht, um über die gesamte Länge des Gefügeelements einen Zahneingriff zu ermöglichen.

2. Gefügeelement nach Anspruch 1,
**dadurch gekennzeichnet, dass** jede der Gliederketten (1,2) wenigstens eine Reihe von Gliedern aufweist, die in der Längsrichtung dieser Gliederketten eine kontinuierliche Verzahnung (13) bilden.

3. Gefügeelement nach Anspruch 1 oder 2,
**dadurch gekennzeichnet, dass** wenigstens eine der Gliederketten mehrere zu einander parallele Reihen von Kettengliedern aufweist, und dass wenigstens zwei dieser Reihen von Kettengliedern mit Zähnen (13) versehen sind, die in der Längsrichtung dieser Gliederkette eine kontinuierliche Verzahnung bilden.

4. Einrichtung, **dadurch gekennzeichnet, dass** sie in Kombination aufweist:
- Ein Gefügeelement nach einem der vorangegangenen Ansprüche und
- eine Vorrichtung zur Erzeugung einer längsgerichteten Tanslation des Gefügeelements,
- wobei die Vorrichtung ein Gehäuse (14a,14b) aufweist, an dem wenigstens drei Rollkörper (17a,17b und 17c) drehbar gelagert sind, wobei wenigstens ein erster (17a) dieser Rollkörper verzahnt ist, um mit den Zähnen (13) wenigstens einer Reihe von Kettengliedern einer der Gliederketten des Gefügeelements zusammenzuwirken, wobei der erste Rollkörper (17a) mit einem Antriebsmotor (18) gekuppelt ist, und wobei ein zweiter (17b) und dritter (17c) der Rollkörper in Berührung mit einem Außenrand der zweiten der Gliederketten stehen.

5. Einrichtung nach Anspruch 4,
**dadurch gekennzeichnet, dass** sie ein Gefügeelement gemäß Anspruch 2 oder 3 aufweist, und dass der zweite (17b) und der dritte Rollkörper (17c) verzahnt sind, um mit der zweiten Gliederkette des Gefügeelements zusammenzuwirken.

6. Einrichtung nach Anspruch 4 oder 5,
**dadurch gekennzeichnet, dass** es sich bei dem Gehäuse um einen Fügeund Lösekasten (21) handelt, der eine das Gefügeelement fügende und lösende Vorrichtung aufweist, die in der Nähe der Rollkörper (17a,17b,17c;34a,34b;35a,35b) angeordnet ist.

7. Vorrichtung, die zur Höhenpositionierung eines Gegenstands bestimmt ist und eine Einrichtung gemäß einem der Ansprüche 4 bis 6 aufweist,
**dadurch gekennzeichnet, dass** die Vorrichtung einen Teller (38) zur Aufnahme des Gegenstands (P) aufweist, wobei der Teller an einem Ende wenigstens eines Gefügeelements (E1,E2) gemäß einem der Ansprüche 1 bis 3 befestigt ist, und wobei das Gefügeelement der Vorrichtung zur Erzeugung einer längsgerichteten Translation (14a bis 19) zugeordnet ist.

8. Vorrichtung nach Anspruch 7, die in einem mit einer doppelten Wandung (FP) versehenen Raum angeordnet ist,
**dadurch gekennzeichnet dass** es sich bei dem Teller (38) um ein bewegliches Teil der doppelten Wandung (FP) handelt, dass sowohl die Komponenten (1,2) des Gefügeelements (E1,E2) als auch der Gegenstand (P) in die doppelte Wandung (FP) hineinbewegbar sind, und dass sie außerdem wenigstens zwei Kassetten (39) aufweist, die in der doppelten Wandung befestigt sind und mit der ebenfalls in der doppelten Wandung angeordneten Vorrichtung (40) zur Erzeugung einer längsgerichteten Translation zusammenwirkt, wobei die Kassetten (39) dazu dienen, jeweils eine der Komponenten (1,2) im hineinbewegten Zustand des Gegenstands aufzunehmen.

9. Vorrichtung nach Anspruch 8,
**dadurch gekennzeichnet, dass** es sich bei der doppelten Wandung um eine Zwischendecke (FP) handelt, und dass die Hineinbewegung des Gegenstands senkrecht von unten nach oben geschieht.

10. Vorrichtung nach Anspruch 9,
**dadurch gekennzeichnet, dass** es sich bei dem Gegenstand um einen Bildprojektor (P), z.B. um einen Diaprojektor, handelt.

11. Vorrichtung zur Errichtung vorübergehender Aufbauten, wie z.B. von Messeständen,
**dadurch gekennzeichnet, dass** sie eine Anzahl am Boden befestigbare Ständer (M1,M2) und eine Anzahl Gefügeelemente (E3,E4,E5) gemäß einem der Ansprüche 1 bis 3 aufweist, wobei die Gefügeelemente dazu bestimmt sind, mit den Ständern zu deren Verstrebung zusammenzuwirken, und dass Kupplungsstücke (41a,41b,41c) vorgesehen sind, um die Ständer (M1,M2) und die Gefügeelemente zu verfestigen, wobei die Kupplungsstücke mit den Zähnen (13) der Gefügeelemente zusammenwirkende, verzahnte Aufnahmen aufweisen.

## Claims

1. A convertible structural element comprising two flexible components which, after assembly, are capable together of assuming the form of a rigid beam, this element including two link chains (1, 2) of which the links (3, 4) are articulated together about respective pins (7, 8) and provided with antagonistic bearing points (10, 11), the first bearing point (10) of a link of rank n of each chain interacting with a second bearing point (11) of a link of rank n-1 in order to trap fastening elements that the pins (7, 8) of the links of the other chain form, when the element is made rigid, **characterised in that** at least some links of at least one of the chains of the structural element exhibit a row of teeth (13) which extend over the entire width of the links and which, together with the teeth of the neighbouring links in the direction of the length of the element, form a continuous toothing extending over the entire length of the element, the row of teeth of a link of rank n coinciding laterally and partially with the rows of respective teeth of the links of rank n+1 and of rank n-1, said structural element exhibiting, in its assembled configuration, a rigid elongate body (c) from which said toothing projects in order to allow meshing over the entire width (I) of this element.

2. The structural element as claimed in claim 1, **characterised in that** each of said chains (1, 2) includes at least one row of links forming a continuous toothing (13) in the direction of the length of these chains.

3. The structural element as claimed in either of claims 1 and 2, **characterised in that** at least one of said chains includes several rows of links in parallel, and **in that** at least two of these rows of links exhibit teeth (13) forming a continuous toothing in the direction of the length of this chain.

4. A unit **characterised in that** it includes, in combination:
- a structural element as claimed in any of the preceding claims, and
- a device for bringing about a longitudinal translation of said structural element,
- said device for longitudinal translation comprising a chassis (14a, 14b) on which there are mounted in rotation at least three rolling members (17a, 17b and 17c), at least a first (17a) of these rolling members being toothed so as to interact with the teeth (13) of at least one row of links of one of the chains of said structural element, **in that** said first rolling member (17a) is coupled to a drive motor (18), and **in that** the second and third rolling members (17b, 17c) are in contact with the outer edge of the second of said chains.

5. The unit as claimed in claim 4, **characterised in that** it includes a structural element as claimed in either of claims 2 and 3, and **in that** said second and third rolling members (17b, 17c) are toothed so as to interact with said second chain of the structural element.

6. The unit as claimed in either of claims 4 and 5, **characterised in that** said chassis is an assembly/disassembly module (21) including a device for assembling/disassembling said structural element, situated close to said rolling elements (17a, 17b, 17c; 34a, 34b, 35a, 35b).

7. A device for the heightwise positioning of an object and comprising a unit as claimed in any of claims 4, 5 and 6 to, **characterised in that** it includes a board (38) designed to support said object (P), said board being secured to one of the ends of at least one structural element (E1, E2) as claimed in any of claims 1 to 3, said structural element being associated with said device (14a to 19) for longitudinal translation.

8. The device as claimed in claim 7, placed in premises with a double wall (FP), **characterised in that** said support board (38) is a removable part of said double wall (FP), **in that** said components (1, 2) of said structural element (E1, E2) as well as said object (P) can be retracted into said double wall (FP), and **in that** it also includes at least two box-type structures (39) fixed into the double wall and communicating with said device (40) for longitudinal translation also placed inside the double wall, said box-type structures (39) being used respectively to house said components (1, 2) in the retracted condition of said object.

9. The device as claimed in claim 8, **characterised in that** said double wall is a false ceiling (FP) and **in that** the movement for retracting said object is achieved vertically upward.

10. The device as claimed in claim 9, **characterised in that** said object is an apparatus (P) for projecting images such as slides.

11. A device for the building of temporary constructions such as exhibition stands, **characterised in that** it comprises a plurality of uprights (M1, M2) designed to be fixed to the ground and a plurality of structural elements (E3, E4, E5) as claimed in any of claims 1 to 3, designed to be attached to said uprights in order to brace them, and **in that** clamping collars (41a, 41b, 41c) equipped with toothed impressions fitting the teeth (13) of said structural elements are designed to secure together said uprights (M1, M2) and said structural elements.
